# EUROPÄISCHE PATENTSCHRIFT

(11) **EP 1 467 193 B1**
(45) Veröffentlichungstag und Bekanntmachung des Hinweises auf die Patenterteilung: **13.09.2006**
(21) Anmeldenummer: 04008409.7
(22) Anmeldetag: 07.04.2004
(51) Int. Cl.: G01L 5/10, G01L 5/04

(54) **System zur Überwachung der Bandspannung eines Gurtes, insbesondere eines Zurrgurtes**
System for monitoring the tension in a belt, in particular in a cargo belt
Système de surveillance de la tension d'une sangle, en particulier d'une sangle d'amarrage

(30) Priorität: 11.04.2003 DE 10316993
(43) Veröffentlichungstag der Anmeldung: 13.10.2004
(73) Patentinhaber: Hydrometer Electronic GmbH, 90451 Nürnberg (DE)
(72) Erfinder: Arnold, Georg, 91126 Schwabach (DE)
(74) Vertreter: Diehl Patentabteilung

(56) Entgegenhaltungen:
- DE-A- 4 036 049
- DE-A- 4 100 245
- DE-A- 4 308 924
- DE-A- 19 739 667
- US-A- 4 420 755
- US-A- 4 803 886

## Beschreibung

Die Erfindung betrifft ein System zum Überwachren der Ladegurtspannung gemäß dem Oberbegriff des Patentanspruches 1.

Das gattungsgemäße System ist aus der DE 1 97 39 667 A1 mit einer in den Gurtverlauf einschleifbaren Spannungs-Messvorrichtung nach Art einer auf Druck beanspruchten Federwaage bekannt. Dabei wird eine Schraubenfeder im Verlauf des Gurtes zwischen zwei zueinander distanzierten Stützstellen auf den gespannten Gurt gedrückt, um ihn nach Maßgabe der Gurtspannung mehr oder weniger stark durchzubiegen. Dessen Gegendruck bewirkt ein Komprimieren der Schraubenfeder. Dieser druckabhängige Federweg ist ein Maß für die aktuelle Gurtspannung. Der Federweg wird an einer Strichskala der Messvorrichtung angezeigt. Eine Kontrolle der Gurtspannung und damit des Sicherheitszustandes der Ladung ist mit einem derartigen System deshalb nur aus unmittelbarer Sicht am Ort der auf den Gurt einwirkenden Messvorrichtung selbst, also nur bei Stillstand des Lastkraftwagens und insbesondere nicht durch den Fahrer während der Transportfahrt möglich.

Der Festsitz des Gurtes musste bisher vor der Fahrt und in Fahrpausen manuell kontrolliert werden, eine Kontrolle während der Fahrt war nicht möglich. Außerdem wurden die Gurte vom Fahrer oder Beifahrer des Kraftfahrzeugs nicht unbedingt in jeder Fahrtpause manuell kontrolliert. Es bestand daher die Gefahr, dass sich ein um eine Ladung gespannter Gurt während der Fahrt lockert und die Ladung verrutschen und dadurch beschädigt werden kann. Es bestand sogar die Möglichkeit, dass ein Teil der unzureichend gesicherten Ladung von dem Kraftfahrzeug herunterfällt und nachfolgende Verkehrsteilnehmer gefährdet.

Der vorliegenden Erfindung liegt deshalb die Aufgabe zugrunde, ein System zum Überwachen des Sitzes eines Gurtes um ein Objekt vorzusehen, welches die Kontrolle des ordnungsgemäßen Sitzes des Gurtes auch während der Fahrt automatisch ermöglicht.

Diese Aufgabe wird durch ein System zum Überwachen des Sitzes eines Gurtes um ein Objekt mit den Merkmalen des Anspruchs 1 gelöst. Vorteilhafte Ausgestaltungen und Weiterbildungen der Erfindung sind Gegenstand der abhängigen Ansprüche.

Das System zum Überwachen des Sitzes eines Gurtes um ein Objekt gemäß der Erfindung umfasst eine Gurteinheit und eine Anzeigeeinheit. Die Gurteinheit weist eine Vorrichtung zum Erfassen der Spannung eines um ein Objekt gespannten Gurtes, einen Sender zum drahtgebundenen oder drahtlosen Übertragen von aus der erfassten Gurtspannung erzeugten Datensignalen und eine Stromversorgung auf; die Anzeigeeinheit weist einen Empfänger zum Empfangen der Datensignale von dem Sender der Gurteinheit, eine Anzeigevorrichtung zum optischen und/oder akustischen Anzeigen von Informationen betreffend die Gurtspannung basierend auf den empfangenen Datensignalen und eine Stromversorgung auf.

Der ordnungsgemäße Sitz eines Gurtes um zum Beispiel eine Ladung eines Kraftfahrzeugs wird durch die Gurteinheit ständig, d.h. auch während der Fahrt des Kraftfahrzeugs, automatisch kontrolliert. Der Fahrer oder Beifahrer des Kraftfahrzeugs wird über die Anzeigeeinheit des Systems über die aktuelle Gurtspannung informiert, sodass er gegebenenfalls die Fahrt unterbrechen und die Ladung wieder sichern kann. Hierdurch werden die Sicherheit der Ladung und auch die der anderen Verkehrsteilnehmer deutlich erhöht.

Vorzugsweise ist die Gurteinheit ein von der Gurtspannvorrichtung separates Bauteil, welches in den Gurt im losen oder gespannten Zustand einschlaufbar ist. Selbst bei einem Verschleiß des Gurtes oder dessen Spannvorrichtung kann die Gurteinheit in diesem Fall weiter mit einem neuen Gurt verwendet werden. Außerdem ist eine geringere Anzahl von Gurteinheiten erforderlich, da nicht jeder Gurt von vornherein mit einer solchen Gurteinheit ausgerüstet werden muss, und die Gurteinheiten sind problemlos und ohne spezielle Umrüstungsmaßnahmen bei bereits bestehenden Systemen einsetzbar.

Alternativ kann die Gurteinheit in eine herkömmliche Gurtspannvorrichtung zum Spannen des Gurtes um das Objekt integriert bzw. in diese einbaubar sein.

Die Vorrichtung zum Erfassen der Gurtspannung ist vorteilhafterweise ein Kraftsensor, der die Kraft misst, die zur Auslenkung des gespannten Gurtes um einen vorgegebenen Weg notwendig ist. Im Gegensatz zu dem eingangs beschriebenen und in der DE 197 39 667 A1 offenbarten herkömmlichen Vorspannmessgerät, bei dem die Auslenkung des gespannten Gurtes aufgrund einer vorgegebenen Federkraft gemessen wird, weniger verschleißanfällig.

Die Übertragung der Datensignale von dem Sender der Gurteinheit an den Empfänger der Anzeigeeinheit erfolgt vorzugsweise per Funk oder über einen drahtgebundenen Bus.

Bei Geräten zur Messung, von Spannungen in Langgestrechten, flexiblen Gütern ist es bekannt Datenfernübertragungseinheiten vor zusehen. Auf solche Telemetrien wird zurückgegriffen in US 4,803,886 zum Übermitteln des Spannungszustandes in einem Kettenglied der Förderkette zum Vorschub einer antriebslosen Laufkatze mit abgehängter Last, oder in US 4,420,755 zum Übermitteln des Lastzustandes am Seil einer Seilwinde am Hubschrauber zum Auffangen von fallschirmgebremst niedergehenden Satellitenlasten; bzw. in DE 4308924 zum Übermitteln der Entwicklung der Zugspannung im Verlaufe einer Tauzieh-Sportveranstaltung. Bevorzugt erfolgt im Rahmen vorliegender Erfindung aber, wie weiter unten noch erwähnt, die Funkverbindung zwischen der Gurtspannungsmessung zur Kontrolle der Ladungssicherheit im Straßenverkehr und der Anzeige im Fahrerhaus auf den Frequenzen 433, 868 oder 915 MHz.

Das System der Erfindung kann auch mehrere Gurteinheiten umfassen, um gleichzeitig den Sitz mehrerer Gurte um ein oder mehrere Objekte überwachen zu können. Die mehreren Gurteinheiten können in diesem Fall mit einer einzigen Anzeigeeinheit kombiniert sein, auf der dem Fahrer parallel oder sequentielle die Informationen bezüglich der verschiedenen Gurteinheiten angezeigt werden.

Als Stromversorgung für die Gurteinheit ist eine Batterie bzw. ein Akkumulator oder eine Solarzelle denkbar. In besonders vorteilhafter Ausführungsform der Erfindung weist die Stromversorgung der Gurteinheit einen Generator auf, der mit der Gurtspannvorrichtung gekoppelt ist. In diesem Fall kann der Generator beispielsweise durch den zum Spannen des Gurtes verwendeten Ratschenmechanismus Strom erzeugen, der für den Betrieb der Gurteinheit verwendet wird. Die Stromversorgung der Anzeigeeinheit ist hingegen vorzugsweise mit dem Bordnetz des Kraftfahrzeugs gekoppelt.

In weiterer Ausgestaltung der Erfindung enthalten die von der Anzeigevorrichtung der Anzeigeeinheit angezeigten Informationen die Werte der erfassten Gurtspannung, Änderungen der erfassten Gurtspannung, das Unterschreiten eines Schwellwerts durch die erfasste Gurtspannung oder eine Kombination aus mehreren dieser Angaben. Die Ermittlung, ob die erfasste Gurtspannung einen vorgegebenen Schwellwert unterschreitet, kann entweder durch eine Auswerteeinheit in der Gurteinheit oder eine Auswerteeinheit in der Anzeigeeinheit erfolgen. Der Schwellwert kann dabei ein fest vorgegebener Schwellwert sein oder vom Benutzer über eine Eingabevorrichtung in die Gurteinheit bzw. die Anzeigeeinheit eingegeben werden.

In weiterer Ausgestaltung der Erfindung werden die Datensignale grundsätzlich in regelmäßigen Abständen vom Sender der Gurteinheit an den Empfänger der Anzeigeeinheit übertragen. Zusätzlich können die Datensignale sofort übertragen werden, wenn die erfasste Spannung des Gurtes den Schwellwert unterschreitet oder falls einen Änderung der erfassten Gurtspannung ein vorgegebenes Maß überschreitet, d.h. insbesondere die Gurtspannung sprunghaft abnimmt.

Vorzugsweise weist die Gurteinheit ferner ebenfalls eine Anzeigevorrichtung zum Anzeigen der erfassten Gurtspannung, einer Änderung der erfassten Gurtspannung und/oder eines Unterschreitens eines Schwellwerts durch die erfasste Gurtspannung auf, sodass die Kontrolle des Festsitzes des Gurtes auch direkt vor Ort einfach erfolgen kann.

In einer weiteren Ausgestaltung der Erfindung kann die Gurteinheit eine weitere Messeinrichtung zum Erfassen einer weiteren physikalischen Größe, wie beispielsweise der Umgebungstemperatur oder der Luftfeuchtigkeit, aufweisen. Diese physikalische Größe ist ebenfalls auf den Anzeigevorrichtungen der Gurteinheit und/oder der Anzeigeeinheit darstellbar, sodass der Fahrer über die Anzeigeeinheit zusätzlich zum Beispiel auch die Temperatur im Laderaum überwachen kann.

Weitere Vorteile und Merkmale der vorliegenden Erfindung werden aus der nachfolgenden Beschreibung eines bevorzugten Ausführungsbeispiels unter Bezugnahme auf die beiliegenden Zeichnungen offensichtlich. Darin zeigen:
- Figur 1: eine schematische Darstellung eines Systems zum automatischen Überwachen des Sitzes eines Gurtes um ein Objekt gemäß der vorliegenden Erfindung; und
- Figur 2: ein schematisches Blockschaltbild des Systems von Figur 1.

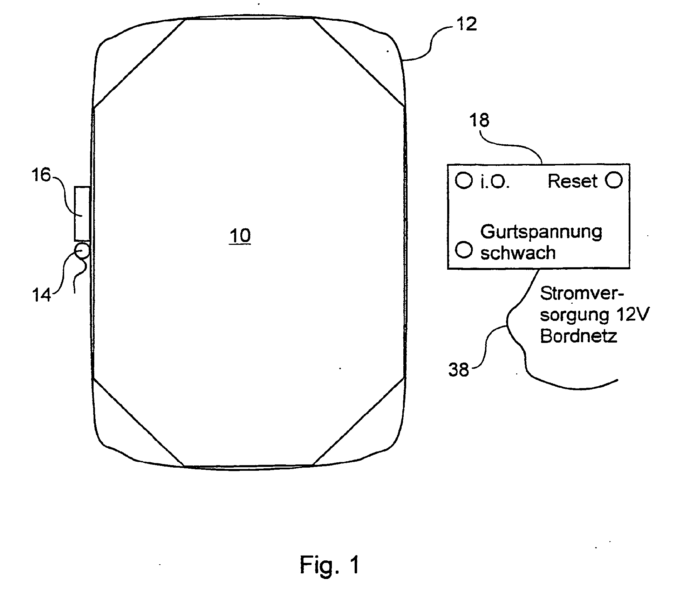

Figur 1 zeigt zunächst ein Objekt 10, wie beispielsweise eine Ladung eines Kraftfahrzeugs, welche durch einen Gurt, Riemen oder dergleichen 12 gesichert, d.h. zusammengehalten und/oder am Kraftfahrzeug befestigt ist. Die Sicherung der Ladung 10 erfolgt über das Spannen bzw. Festzurren eines oder mehrerer Gurte 12 mittels einer geeigneten Gurtspannvorrichtung 14. Als Gurtspannvorrichtung 14 kann grundsätzlich eine beliebige Konstruktion eingesetzt werden, die zum Beispiel einen Ratschenmechanismus enthalten kann, wie das in der DE 36 39 712 A1 beschriebene Spannwerkzeug.

Das System der Erfindung zum Überwachen des Sitzes des Gurtes 12 um die Ladung 10 umfasst gemäß Figur 1 eine Gurteinheit 16, welche in die Gurtspannvorrichtung 14 integriert ist bzw. in diese einbaubar ist, und eine separate Anzeigeeinheit 18. Die Anzeigeeinheit 18 befindet sich in der Führerkabine eines Lastkraftwagens, um dem Fahrer jederzeit den Spannungszustands des Gurtes 12 anzuzeigen. Insbesondere zeigt die Anzeigeeinheit aktuelle Werte der erfassten Gurtspannung, Änderungen der erfassten Gurtspannung, ein Unterschreiten eines Schwellwerts durch die erfasste Gurtspannung oder eine Kombination aus mehreren dieser Angaben an. Hierdurch kann der Fahrer oder Beifahrer des Kraftfahrzeugs auch während der Fahrt jederzeit automatisch über den Spannungszustand des Gurtes 12 informiert werden und gegebenenfalls seine Fahrt sofort unterbrechen, um die Ladung 10 wieder zu sichern, falls sich ein Gurt 12 zu sehr gelöst haben sollte und die Ladung 10 nicht mehr ausreichend gesichert ist.

Während in dem Ausführungsbeispiel von Figur 1 die Gurteinheit 16 in die Gurtspannvorrichtung 14 integriert bzw. integrierbar ist, ist es vorteilhafterweise auch möglich, die Gurteinheit 16 als separates Bauteil vorzusehen, das in den Gurt 12 einschlaufbar ist. Dieses Einschlaufen in den Gurt 12 kann sowohl im losen als auch im bereits gespannten Zustand des Gurtes 12 erfolgen. Die separate Gurteinheit 16 hat die Vorteile, dass die Gurteinheit 16 unabhängig vom Verschleiß des Gurtes 12 und der Gurtspannvorrichtung 14 ist, weniger Gurteinheiten 16 bereitgestellt werden müssen und die Gurteinheiten 16 auch bei bereits vorhandenen herkömmlichen Systemen einsetzbar sind.

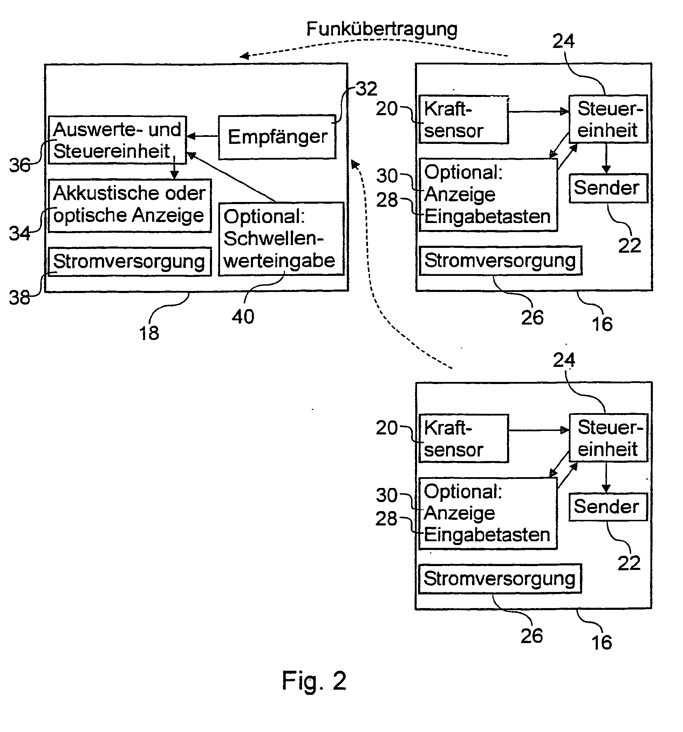

Der Aufbau des Systems wird nun näher anhand von Figur 2 erläutert. Wie in Figur 2 dargestellt, kann das System der Erfindung vorteilhafterweise auch mehrere identisch aufgebaute Gurteinheiten 16 umfassen, die mit einer einzigen Anzeigeeinheit 18 gekoppelt sind, sodass der Fahrer oder Beifahrer mit nur einer einzigen Anzeigeeinheit gleichzeitig mehrere Gurte 12, die um eine oder mehrere Ladungen 10 gespannt sind, überwachen kann. Die gemeinsame Anzeigeeinheit 18 zeigt die Informationen betreffend die verschiedenen Gurteinheiten 16 entweder parallel oder sequentiell an.

Jede der Gurteinheiten 16 weist eine Vorrichtung 20 zum Erfassen der Spannung des um die Ladung 10 gespannten Gurtes 12 zum Beispiel in Form eines Kraftmessers bzw. Kraftsensors, einen Sender 22 zum Übertragen von aus der durch den Kraftsensor 20 erfassten Gurtspannung erzeugten Datensignalen, eine Steuereinheit 24 zum Steuern des Kraftsensors 20 und des Senders 22 sowie eine Stromversorgung 26 für die Komponenten der Gurteinheit 16 auf. Die Stromversorgung 26 der Gurteinheit 16 kann zum Beispiel eine Batterie oder einen Akkumulator oder alternativ eine Solarzelle aufweisen. Im Fall der in die Gurtspannvorrichtung 14 integrierten Gurteinheit 16 kann die Stromversorgung 26 vorzugsweise einen Generator aufweisen, der mit der Gurtspannvorrichtung 14 gekoppelt ist, um zum Beispiel aus der Betätigung eines Ratschenmechanismus der Gurtspannvorrichtung 14 einen Strom zu erzeugen, der für die Gurteinheit 16 verwendet werden kann.

Die Vorrichtung 20 zum Erfassen der Gurtspannung ist beispielsweise ein Kraftsensor mit einer eingebauten Feder, die auf den gespannten Gurt 12 wirkt. Die durch die Kraft der Feder bewirkte Auslenkung des Gurtes 12 ist ein Maß für dessen Spannung. Ein solches Spannungsmessgerät ist zum Beispiel aus der bereits erwähnten DE 197 39 667 A1 bekannt.

Da es sich bei der Feder dieses Spannungsmessgeräts um ein Verschleißteil handelt, ist die Vorrichtung 20 zum Erfassen der Gurtspannung bevorzugter als Kraftsensor ausgebildet, der eine für die Auslenkung um ein vorgegebenes Maß von beispielsweise 5 mm erforderliche Kraft misst. Diese eingesetzte Kraft kann zum Beispiel über einen Dehnungsmessstreifen erfasst werden, der eine hohe Genauigkeit gewährleistet.

Die Gurteinheit 16 kann außerdem optional eine Eingabevorrichtung 28 und eine Anzeigevorrichtung 30 aufweisen. Über die Eingabevorrichtung 28 kann der Gurteinheit 16 zum Beispiel ein Schwellwert für die Gurtspannung eingegeben werden, der nicht unterschritten werden darf. Die Anzeigevorrichtung 30 ermöglicht die Kontrolle des Spannungszustandes des Gurtes 12 auch ohne die Anzeigeeinheit 18 direkt vor Ort. Die Anzeigevorrichtung 30 der Gurteinheit 16 kann daher ebenso die erfasste Gurtspannung, Änderungen der erfassten Gurtspannung, ein Unterschreiten des Schwellwerts durch die erfasste Gurtspannung oder eine Kombination mehrerer dieser Angaben anzeigen.

Zusätzlich kann die Gurteinheit 16 der Erfindung noch weitere Funktionen übernehmen. So ist es zum Beispiel denkbar, dass die Gurteinheit 16 eine weitere Messeinrichtung (nicht dargestellt) zum Erfassen wenigstens einer weiteren physikalischen Größe neben der Gurtspannung aufweist. Diese weitere physikalische Größe kann zum Beispiel die Umgebungstemperatur oder die Luftfeuchtigkeit sein, welche insbesondere bei empfindlichen oder gefährlichen Ladungsgütern für einen sicheren Transport derselben relevant sein können. Diese wenigstens eine weitere physikalische Größe kann ebenfalls auf der Anzeigevorrichtung 30 der Gurteinheit 16 angezeigt werden, sodass der Fahrer diesen Wert vor Ort überwachen kann. Von besonderem Vorteil ist es aber, wenn auch diese weitere physikalische Größe der Anzeigeeinheit 18 übertragen und auf deren Anzeigevorrichtung 38 - gegebenenfalls unter Berücksichtigung eines zugehörigen Schwellwerts - angezeigt wird. Auf diese Weise kann der Fahrer mittels der Anzeigeeinheit 18 auch während der Fahrt ständig die Umgebungsbedingungen seiner Fracht überwachen und gegebenenfalls rechtzeitig Gegenmaßnahmen einleiten.

In die Steuereinheit 24 der Gurteinheit 16 kann ferner auch eine Auswerteeinheit integriert sein, welche die durch den Kraftsensor 20 erfasste Gurtspannung mit einem fest vorgegebenen Schwellwert oder einem über die Eingabevorrichtung 28 manuell eingegebenen Schwellwert vergleicht.

Die Sender 22 der Gurteinheiten 16 übertragen die Datensignale betreffend die erfassten Gurtspannungen drahtlos, bevorzugt per Funk an die eine Anzeigeeinheit 18. Die Funkübertragung erfolgt beispielsweise mit einer Frequenz von 433 MHz, 868 MHz oder 915 MHz.

Die Anzeigeeinheit 18 umfasst einen Empfänger 32 zum Empfangen der Datensignale von den Sendern 22 der Gurteinheiten 16, eine Anzeigevorrichtung 34 zum optischen und/oder akustischen Anzeigen von Informationen betreffend die Gurtspannung basierend auf den empfangenen Datensignalen, eine Auswerte- und Steuereinheit 36 zum Steuern der Komponenten der Anzeigeeinheit sowie eine Stromversorgung 38. Optional kann die Anzeigeeinheit ferner eine Eingabevorrichtung 40 zum manuellen Eingeben eines Schwellwerts für die Gurtspannung enthalten.

Die Stromversorgung der Anzeigeeinheit 18 ist vorzugsweise mit dem Bordnetz des Kraftfahrzeugs gekoppelt. Selbstverständlich kann die Stromversorgung 38 aber auch eine Batterie bzw. einen Akkumulator enthalten. Die auf der Anzeigevorrichtung 34 der Anzeigeeinheit 18 angezeigten Informationen betreffend die Gurtspannung enthalten die aktuellen Werte der erfassten Gurtspannung, Änderungen der erfassten Gurtspannungen, das Unterschreiten eines Schwellwerts durch eine erfasste Gurtspannung oder eine Kombination aus mehreren dieser Angaben. Zusätzlich kann dem Fahrer auch ein akustischer Warnhinweis ausgegeben werden, falls die Gurtspannung eines Gurtes 12 den vorgegebenen Schwellwert unterschreitet oder eine sehr große Änderung in der Gurtspannung eines Gurtes 12 erfasst wird, sodass der Fahrer die Anzeigeeinheit nicht notwendigerweise ständig beobachten muss.

Die Übertragung der Datensignale von den Sendern 22 der Gurteinheiten 16 an den Empfänger 32 der Anzeigeeinheit 18 erfolgt in regelmäßigen Zeitabständen. Zusätzlich erfolgt eine sofortige Datenübertragung, wenn die durch den Kraftsensor 20 erfasste Gurtspannung den vorgegebenen Schwellwert unterschreitet oder wenn eine Änderung der durch den Kraftsensor 20 erfassten Gurtspannung ein vorgegebenes Maß überschreitet, also die Gurtspannung sprunghaft abnimmt, da in diesem Fall eine akute Gefahrensituation gegeben sein kann und der Fahrer den gelockerten Gurt 12 möglichst umgehend wieder spannen sollte. Der Vergleich der erfassten Gurtspannung mit dem fest vorgegebenen oder dem manuell eingegebenen Schwellwert kann entweder auf Seiten der Gurteinheiten 16 mit der entsprechenden Auswerteeinheit in der Steuereinheit 24 oder auf Seiten der Anzeigeeinheit 18 mittels der Auswerte- und Steuereinheit 36 erfolgen.

Das oben beschriebene und in den Figuren 1 und 2 dargestellte System der Erfindung ermöglicht die automatische Überwachung des Sitzes von um Objekte 10 gespannten Gurten 12 jederzeit, sodass der Spannungszustand der Gurte 12 auch während der Fahrt eines Kraftfahrzeugs durch den Fahrer bzw. Beifahrer vom Führerhaus aus überwacht werden kann. Dies ermöglicht das sofortige Reagieren auf einen möglicherweise gelockerten Gurt 12, sodass die Gefahr einer Beschädigung der Ladung 10 und eine Gefährdung der übrigen Verkehrsteilnehmer durch zum Beispiel herunterfallende Ladungsstücke 10 verhindert werden können.

### Bezugsziffernliste

- 10: Objekt / Ladung
- 12: Gurt
- 14: Gurtspannvorrichtung
- 16: Gurteinheit
- 18: Anzeigeeinheit
- 20: Kraftsensor
- 22: Sender
- 24: Steuereinheit
- 26: Stromversorgung
- 28: Eingabevorrichtung
- 30: Anzeigevorrichtung
- 32: Empfänger
- 34: akustische oder optische Anzeigevorrichtung
- 36: Auswerte- und Steuereinheit
- 38: Stromversorgung
- 40: Eingabevorrichtung

## Patentansprüche

1. System zum Überwachen des Sitzes eines um die Ladung eines Lastkraftwagens gespannten Gurtes (12), umfassend eine in den Gurtverlauf einschlaufbare Gurteinheit (16) mit einer Vorrichtung (20) zum Erfassen der Spannung des um ein Objekt (10) der Ladung gespannten Gurtes (12) und eine Anzeigeeinheit (18) für die erfaßte Gurtspannung, **dadurch gekennzeichnet, daß** die Gurteinheit (16) eine Stromversorgung (26) und einen Sender (22) zum Übertragen von aus der erfaßten Gurtspannung erzeugten Datensignalen aufweist, während eine elektrisch betriebene Anzeigeeinheit (18) zu jederzeitiger Information des Fahrers oder Beifahrers in der Führerkabine des Lastkraftwagens angeordnet und mit einem Empfänger (32) zum Empfangen der Datensignale vom Sender (22) sowie mit einer Anzeigevorrichtung (34) zum optischen und/oder akustischen Anzeigen von, auf diesen empfangenen Datensignalen basierenden, Informationen betreffend die Gurtspannung ausgestattet ist.

2. System nach Anspruch 1,
**dadurch gekennzeichnet,**
**dass** die Gurteinheit (16) ein von der Gurtspannvorrichtung (14) und dem Gurt (12) separates Bauteil ist, das in den Gurt (12) in dessen losen oder gespannten Zustand einschlaufbar ist, oder
**dass** die Gurteinheit (16) in eine Gurtspannvorrichtung (14) zum Spannen des Gurtes um das Objekt (10) integriert ist bzw. in diese einbaubar ist.

3. System nach Anspruch 1 oder 2,
**dadurch gekennzeichnet,**
**dass** die Vorrichtung (20) zum Erfassen der Spannung des Gurtes ein Kraftsensor ist, der die Kraft misst, die zum Auslenken des gespannten Gurtes (12) um ein vorgegebenes Maß notwendig ist.

4. System nach einem der Ansprüche 1 bis 3,
**dadurch gekennzeichnet,**
**dass** die Übertragung der Datensignale von dem Sender (22) der Gurteinheit (16) an den Empfänger (32) der Anzeigeeinheit (18) per Funk oder über einen drahtgebundenen Bus erfolgt.

5. System nach einem der Ansprüche 1 bis 4,
**dadurch gekennzeichnet,**
**dass** mehrere Gurteinheiten (16) vorgesehen sind, um gleichzeitig den Sitz mehrerer Gurte (12) um ein oder mehrere Objekte (10) überwachen zu können,
wobei vorzugsweise vorgesehen sein kann, dass einige oder alle Gurteinheiten (16) drahtgebunden oder drahtlos mit einem Vermittlungsbaustein (Interface) in Verbindung stehen und der Vermittlungsbaustein wiederum drahtgebunden oder drahtlos mit der Anzeigeeinheit (18) in Verbindung steht, wobei der Vermittlungsbaustein insbesondere einen Empfänger zum Empfangen der Datensignale von den Gurteinheiten (16), einen Sender zum Weitersenden der Datensignale an die Anzeigeeinheit (18) und eine Stromversorgung aufweist.

6. System nach einem der Ansprüche 1 bis 5,
**dadurch gekennzeichnet,**
**dass** die Stromversorgung (26) der Gurteinheit (16) eine Batterie, einen Akkumulator, eine Solarzelle oder einen Generator aufweist, der mit der Gurtspannvorrichtung (14) gekoppelt ist, und/oder dass die Stromversorgung (38) der Anzeigeeinheit (18) mit dem Bordnetz eines Kraftfahrzeugs gekoppelt ist.

7. System nach einem der Ansprüche 1 bis 6,
**dadurch gekennzeichnet,**
**dass** die von der Anzeigevorrichtung (34) der Anzeigeeinheit (18) angezeigten Informationen die Werte der erfassten Gurtspannung, Änderungen der erfassten Gurtspannung und/oder das Unterschreiten eines Schwellwerts durch die erfasste Gurtspannung enthalten, wobei die Gurteinheit (16) und/oder die Anzeigeeinheit (18) vorzugsweise eine Eingabevorrichtung (28,40) zum Eingeben des Schwellwerts aufweist oder der Schwellwert ein fest vorgegebener Schwellwert ist.

8. System nach einem der Ansprüche 1 bis 7,
**dadurch gekennzeichnet,**
**dass** die Gurteinheit (16) ferner eine Auswerteeinheit aufweist, die die erfasste Gurtspannung mit einem Schwellwert vergleicht,
**dass** die vom Sender (22) übertragenen Datensignale das Unterschreiten des Schwellwerts durch die erfasste Gurtspannung enthalten und/oder
**dass** die Anzeigeeinheit (18) ferner eine Auswerteeinheit aufweist, die die erfasste Gurtspannung mit einem Schwellwert vergleicht, wobei die Gurteinheit (16) und/oder die Anzeigeeinheit (18) vorzugsweise eine Eingabevorrichtung (28, 40) zum Eingeben des Schwellwerts aufweist oder der Schwellwert ein fest vorgegebener Schwellwert ist.

9. System nach einem der Ansprüche 1 bis 8,
**dadurch gekennzeichnet,**
**dass** die Datensignale von dem Sender (22) der Gurteinheit (16) an den Empfänger (32) der Anzeigeeinheit (18) in regelmäßigen Abständen übertragen werden und/oder
**dass** die Datensignale von dem Sender (22) der Gurteinheit (16) an den Empfänger (32) der Anzeigeeinheit (18) übertragen werden, wenn die erfasste Gurtspannung den Schwellwert unterschreitet, und/oder
**dass** die Datensignale von dem Sender (22) der Gurteinheit (16) an den Empfänger (32) der Anzeigeeinheit (18) übertragen werden, falls eine Änderung der erfassten Gurtspannung ein vorgegebenes Maß überschreitet.

10. System nach einem der Ansprüche 1 bis 9,
**dadurch gekennzeichnet,**
**dass** die Gurteinheit (16) ferner eine Anzeigevorrichtung (30) zum Anzeigen der erfassten Gurtspannung, einer Änderung der erfassten Gurtspannung und/oder eines Unterschreitens eines Schwellwerts durch die erfasste Gurtspannung aufweist und/oder
**dass** die Gurteinheit (16) ferner eine weitere Messeinrichtung zum Erfassen wenigstens einer weiteren physikalischen Größe aufweist, wobei die erfasste physikalische Größe auf der Anzeigevorrichtung (30, 34) der Gurteinheit (16) und/oder der Anzeigeeinheit (18) anzeigbar ist.

## Claims

1. System for monitoring the fit of a strap (12) which is tensioned around the load of a heavy goods vehicle, comprising a strap unit (16) which can be looped into the course of the strap and has an apparatus (20) for detecting the tension of the strap (12) which is tensioned around an object (10) of the load, and a display unit (18) for the detected strap tension, **characterized in that** the strap unit (16) has a power-supply means (26) and a transmitter (22) for transmitting data signals which are generated from the detected strap tension, whereas an electrically operated display unit (18) is arranged in the driver's cab of the heavy goods vehicle to provide the driver or passenger with information at any time and is equipped with a receiver (32) for receiving the data signals from the transmitter (22) and with a display apparatus (34) for visually displaying and/or audibly indicating information which is based on these received data signals and relates to the strap tension.

2. System according to Claim 1,
**characterized**
**in that** the strap unit (16) is a component which is separate from the strap-tensioning apparatus (14) and the strap (12) and can be looped into the strap (12) in the loose or tensioned state thereof, or
**in that** the strap unit (16) is integrated or can be installed in a strap-tensioning apparatus (14) in order to tension the strap around the object (10).

3. System according to Claim 1 or 2,
**characterized**
**in that** the apparatus (20) for detecting the tension of the strap is a force sensor which measures the force which is required to deflect the tensioned strap (12) by a prespecified extent.

4. System according to one of Claims 1 to 3,
**characterized**
**in that** the data signals are transmitted from the transmitter (22) of the strap unit (16) to the receiver (32) of the display unit (18) by radio or by means of a wire-based bus.

5. System according to one of Claims 1 to 4,
**characterized**
**in that** a plurality of strap units (16) are provided in order to be able to simultaneously monitor the fit of a plurality of straps (12) around one or more objects (10),
it preferably being possible for some or all of the strap units (16) to be connected to a switching module (interface) in a wire-based or wire-free manner and for the switching module in turn to be connected to the display unit (18) in a wire-based or wire-free manner, with the switching module having, in particular, a receiver for receiving the data signals from the strap units (16), a transmitter for forwarding the data signals to the display unit (18), and a power-supply means.

6. System according to one of Claims 1 to 5,
**characterized**
**in that** the power-supply means (26) of the strap unit (16) has a battery, a storage battery, a solar cell or a generator which is coupled to the strap-tensioning apparatus (14), and/or in that the power-supply means (38) of the display unit (18) is coupled to the on-board electrical system of a motor vehicle.

7. System according to one of Claims 1 to 6,
**characterized**
**in that** the information displayed by the display apparatus (34) of the display unit (18) contains the values of the detected strap tension, changes in the detected strap tension and/or information about the detected strap tension falling below a threshold value, with the strap unit (16) and/or the display unit (18) preferably having an input apparatus (28, 40) for inputting the threshold value, or the threshold value being a firmly prespecified threshold value.

8. System according to one of Claims 1 to 7,
**characterized**
**in that** the strap unit (16) also has an evaluation unit which compares the detected strap tension with a threshold value,
**in that** the data signals transmitted by the transmitter (22) contain information about the detected strap tension falling below the threshold value, and/or
**in that** the display unit (18) also has an evaluation unit which compares the detected strap tension with a threshold value, with the strap unit (16) and/or the display unit (18) preferably having an input apparatus (28, 40) for inputting the threshold value, or the threshold value being a firmly prespecified threshold value.

9. System according to one of Claims 1 to 8,
**characterized**
**in that** the data signals are transmitted from the transmitter (22) of the strap unit (16) to the receiver (32) of the display unit (18) at regular intervals, and/or
**in that** the data signals are transmitted from the transmitter (22) of the strap unit (16) to the receiver (32) of the display unit (18) when the detected strap tension falls below the threshold value, and/or
**in that** the data signals are transmitted from the transmitter (22) of the strap unit (16) to the receiver (32) of the display unit (18) if the detected strap tension changes by more than a prespecified amount.

10. System according to one of Claims 1 to 9,
**characterized**
**in that** the strap unit (16) also has a display apparatus (30) for displaying the detected strap tension, a change in the detected strap tension and/or information about the detected strap tension falling below a threshold value, and/or
**in that** the strap unit (16) also has a further measuring device for detecting at least one further physical variable, it being possible to display the detected physical variable on the display apparatus (30, 34) of the strap unit (16) and/or the display unit (18).

## Revendications

1. Système de surveillance de l'assise d'une sangle (12) tendue autour du chargement d'un camion, comprenant une unité de sangle (16) pouvant être enfilé dans le trajet de la sangle et munie d'un dispositif (20) pour détecter la tension de la sangle (12) tendue autour d'un objet (10) du chargement et une unité d'affichage (18) pour la tension de sangle détectée, **caractérisé en ce que** l'unité de sangle (16) présente une alimentation électrique (26) et un émetteur (22) pour la transmission de signaux de données générés à partir de la tension de sangle détectée, alors qu'une unité d'affichage (18) à fonctionnement électrique est disposée dans la cabine de conduite du camion afin d'informer à tout moment le conducteur ou le passager et est équipée d'un récepteur (32) pour recevoir les signaux de données de l'émetteur (22) ainsi qu'un dispositif indicateur (34) pour l'indication visuelle et/ou sonore des informations concernant la tension de la sangle en se basant sur ces signaux de données reçus.

2. Système selon la revendication 1, **caractérisé en ce que** l'unité de sangle (16) est un composant séparé du dispositif tendeur de sangle (14) et de la sangle (12) qui peut être enfilé dans la sangle (12) lorsque celle-ci est relâchée ou tendue ou que l'unité de sangle (16) est intégrée ou peut être intégrée dans un dispositif tendeur de sangle (14) destiné à serrer la sangle autour de l'objet (10).

3. Système selon la revendication 1 ou 2, **caractérisé en ce que** le dispositif (20) de détection de la tension de la sangle est un capteur dynamométrique qui mesure la force nécessaire pour l'élongation de la sangle (12) tendue d'un niveau prédéfini.

4. Système selon l'une des revendications 1 à 3, **caractérisé en ce que** la transmission des signaux de données de l'émetteur (22) de l'unité de sangle (16) au récepteur (32) de l'unité d'affichage (18) s'effectue par radio ou par le biais d'un bus à liaison filaire.

5. Système selon l'une des revendications 1 à 4, **caractérisé en ce que** plusieurs unités de sangle (16) sont prévues afin de pouvoir surveiller simultanément l'assise de plusieurs sangles (12) autour d'un ou de plusieurs objets (10), avec lequel il peut de préférence être prévu que quelques-unes ou la totalité des unités de sangle (16) soient en liaison filaire ou sans fil avec un module de commutation (interface) et le module de commutation se trouve à son tour en liaison filaire ou sans fil avec l'unité d'affichage (18), le module de commutation présentant notamment un récepteur pour recevoir les signaux de données des unités de sangle (16), un émetteur pour réémettre les signaux de données à l'unité d'affichage (18) et une alimentation électrique.

6. Système selon l'une des revendications 1 à 5, **caractérisé en ce que** l'alimentation électrique (26) de l'unité de sangle (16) présente une pile, un accumulateur, une cellule solaire ou un générateur qui est connecté avec le dispositif tendeur de sangle (14) et/ou **en ce que** l'alimentation électrique (38) de l'unité d'affichage (18) est connectée avec le réseau de bord d'un véhicule automobile.

7. Système selon l'une des revendications 1 à 6, **caractérisé en ce que** les informations affichées par le dispositif indicateur (34) de l'unité d'affichage (18) comprennent les valeurs de la tension de sangle détectée, les modifications de la tension de sangle détectée et/ou le franchissement vers le bas d'une valeur de seuil par la tension de sangle détectée, l'unité de sangle (16) et/ou l'unité d'affichage (18) présentant de préférence un dispositif de saisie (28, 40) pour la saisie de la valeur de seuil ou alors la valeur de seuil étant une valeur de seuil prédéfinie fixe.

8. Système selon l'une des revendications 1 à 7, **caractérisé en ce que** l'unité de sangle (16) présente en plus une unité d'interprétation qui compare la tension de sangle détectée avec une valeur de seuil, que les signaux de données transmis par l'émetteur (22) contiennent le franchissement vers le bas de la valeur de seuil par la tension de sangle détectée et/ou que l'unité d'affichage (18) présente en plus une unité d'interprétation qui compare la tension de sangle détectée avec une valeur de seuil, l'unité de sangle (16) et/ou l'unité d'affichage (18) présentant de préférence un dispositif de saisie (28, 40) pour la saisie de la valeur de seuil ou alors la valeur de seuil étant une valeur de seuil prédéfinie fixe.

9. Système selon l'une des revendications 1 à 8, **caractérisé en ce que** les signaux de données sont transmis à intervalles réguliers de l'émetteur (22) de l'unité de sangle (16) au récepteur (32) de l'unité d'affichage (18) et/ou que les signaux de données sont transmis de l'émetteur (22) de l'unité de sangle (16) au récepteur (32) de l'unité d'affichage (18) lorsque la tension de sangle détectée franchit la valeur de seuil vers le bas et/ou que les signaux de données sont transmis de l'émetteur (22) de l'unité de sangle (16) au récepteur (32) de l'unité d'affichage (18) lorsqu'une variation de la tension de sangle détectée dépasse un niveau prédéfini.

10. Système selon l'une des revendications 1 à 9, **caractérisé en ce que** l'unité de sangle (16) présente en plus un dispositif indicateur (30) pour indiquer la tension de sangle détectée, une variation de la tension de sangle détectée et/ou un franchissement vers le bas d'une valeur de seuil par la tension de sangle détectée et/ou que l'unité de sangle (16) présente en plus un dispositif de mesure supplémentaire pour détecter au moins une grandeur physique supplémentaire, la grandeur physique détectée pouvant être affichée sur le dispositif indicateur (30, 34) de l'unité de sangle (16) et/ou de l'unité d'affichage (18).
